# EUROPÄISCHE PATENTANMELDUNG

(11) **EP 0 708 015 A2**
(43) Veröffentlichungstag der Anmeldung: **24.04.1996**
(21) Anmeldenummer: 95116635.4
(22) Anmeldetag: 22.10.1995
(51) Int. Cl.: B62J 7/04

(54) **Universalgepäckträger für Zweiräder**

(30) Priorität: 23.10.1994 DE 4437607
(71) Anmelder: Kühn, Armin, D-81543 München (DE)
(72) Erfinder: Kühn, Armin, D-81543 München (DE)

(57) **Zusammenfassung**

Die Erfindung betrifft einen Universalgepäckträger für Fahrräder dessen obere Anschlußpunkte als Zug/Druckbelastbare Festlager und dessen untere Anschlußpunkte als Druck-belastbare Loslager ausgebildet sind. Die oberen Lager sind dabei derart konstruiert, daß sie ein Eingreifen in den Zugbolzen einer konventionellen Sattelstützeneinspannung ermöglichen, während die unteren Lager als Auflagerelemente für ein Abstützen an hintern Radschenkel-Stützstreben eines Fahrrads vorgesehen sind.

## Beschreibung

Die vorliegende Erfindung bezieht sich auf einen Universalgepäckträger für ein Zweirad beispielsweise ein Fahrrad, Mofa und dergleichen Krafträder.

Aus dem Stand der Technik sind Universalgepäckträger dieser Gattung hinlänglich bekannt. Solche Gepäckträger wurden bislang derart an einem Zweirad insbesondere einem Fahrrad montiert, indem diese Gepäckträger mittels Schrauben und Schraubenmuttern an speziell am jeweiligen Fahrrad ausgebildeten Anschlußsockeln fest verschraubt wurden. Bei einem Fehlen solcher Anschlußsockel mußte sich der Benutzer dieser Gepäckträger mit schellenartigen Klemmelementen behelfen, die an geeigneten Stellen am Fahradrahmen ebenfalls mittels Schrauben und Schraubenmuttern befestigt wurden.

Bei dieser Art der Befestigung hat es sich als nachteilig erwiesen, daß ein Abnehmen des Gepäckträgers sehr zeitaufwendig und umständlich war. Viele Benutzer insbesondere sportlich orientierter Fahrräder wie Rennräder oder sogenannte Mountenbikes, die im übrigen vielfach ungewöhnliche Rahmengeometrien aufweisen und auch überdimensionierte Rahmenrohre verwenden, verzichteten daher auf die Montage eines Gepäckträgers. Es gibt jedoch auch für Benutzer sportlicher Fahrräder durchaus Situationen, in denen das Vorhandensein eines Gepäckträgers wünschenswert ist, um beispielsweise Sportbekleidung oder dergleichen Gepäckstücke bequem mitführen zu können.

Eine Lösung dieses Problems sah bisher die Anordnung einer Lenkertasche vor, die am Lenker des Zweirads lösbar befestigt wurde. Derartige Taschen haben jedoch den Nachteil, daß sie das Massenträgheitsmoment des gesamten Lenkungssystems erhöhen und so die Lenkbarkeit des Zweirads erheblich verschlechtern.

Aus diesem Grund wurde ein Gepäckträger für die Montage über dem Hinterrad des Zweirads vorgeschlagen, dessen Befestigungseinrichtung aus einem an einem Sattelrohr des Zweirads festklemmbaren Tragteil mit einem am rückseitigen, zum Gepäckträger hinweisenden Ende nach unter abgeschrägten Stützabschnitt besteht, an dem der Gepäckträger anliegt und mittels einer Klemmvorrichtung lösbar befestigt ist. Durch diese bekannte Ausbildung läßt sich zwar der Gepäckträger schnell vom Zweirad lösen. Es muß jedoch in Kauf genommen werden, daß das speziell für diesen Träger konzipierte Tragteil grundsätzlich an der Sattelstütze in fest verschraubtem Zustand verbleibt und somit das Erscheinungsbild des Zweirads auch bei abmontiertem Gepäckträger zumindest verändert.

Der Erfindung liegt angesichts dieses Stands der Technik die Aufgabe zugrunde, einen gattungsgemäßen Universalgepäckträger für Zweiräder insbesondere für Fahrräder zu schaffen, der schnell montier- und demontierbar ist und keine nachteiligen Veränderungen am äußeren Erscheinungsbild des Zweirads in demontiertem Zustand hervorruft.

Diese Aufgabe wird erfindungsgemäß durch einen Universalgepäckträger mit den technischen Merkmalen gemäß dem Anspruch 1 gelöst.

Grundgedanke der Erfindung ist es, nicht wie bisher im Stand der Technik nach dem Adapterprinzip speziell für den Gepäckträger konstruierte Halteeinrichtungen am Fahrradrahmen anzubringen, d.h. diesen für den Gepäckträger quasi passend zu machen, sondern die am Zweirad bereits grundsätzlich vorhandenen, für andere Zwecke vorgesehenen Befestigungs- und Abstützeinrichtungen für das Anmontieren des erfindungsgemäßen Gepäckträgers zu nutzen und dementsprechend die Gepäckträger-seitigen Anschlußpunkte zu dimensionieren.

Bei der Betrachtung insbesondere eines Fahrradrahmens fallen zumindest zwei Rahmenelemente auf, die jeder Rahmengeometrie eigen sind, völlig gleichgültig, ob es hierbei den Rahmen eines Rennrads, eines Mountenbikes oder eines anderen Fahrradtyps betrifft. Bei diesen in Rede stehenden Rahmenelementen handelt es sich um ein im wesentlichen vertikal ausgerichtetes Aufnahmerohr einer Sattelstütze sowie um zwei schräg nach unten verlaufende Stützstreben der hinteren Radschenkel das Fahrrads, die zusammen mit dem Aufnahmerohr und den Radschenkeln einen doppelschleifigen Dreischlag bilden. Ein oberer Endabschnitt des Aufnahmerohrs ist dabei bei nahezu allen bekannten Fahrrädern von einer Schelle eingefaßt, die auf einer Seite des Aufnahmerohrs mittels eines im wesentlichen horizontal verlaufenden Schraubenbolzens zusammengezogen werden kann und somit die Sattelstütze im Aufnahmerohr fixiert. Insbesondere bei sportlichen Fahrrädern wird dieser Schraubenbolzen für gewöhnlich durch einen Zugbolzen mit Kniehebel ersetzt, der eine schnelle Höhenverstellung des Sattels erlaubt.

Die Erfindung sieht nunmehr vor, die Anschlußpunkte des erfindungsgemäßen Universalgepäckträgers kraftorientiert, d.h. ausschließlich zur Aufnahme der jeweils zu erwartenden Kraft zu dimensionieren und somit den Universalgepäckträger in quasi statisch bestimmter Weise am Zweiradrahmen zu befestigen. Der Universalgepäckträger gemäß der Erfindung mit einer im wesentlichen ebenen Gepäckbrücke, an der in einem Winkel zur von der Gepäckbrücke aufgespannten Ebene sich erstreckende, in Breitenabstand der Gepäckbrücke sich ausrichtende Abstützstreben angeordnet sind, hat demzufolge obere, vor einer Vorderkante der Gepäckbrücke sich befindliche Befestigungselemente vorzugsweise für die Aufnahme eines Bolzens oder einer Schraube, die als im wesentlichen zweidimensionale Zug/Druck-Festlager ausgebildet sind, sowie an den freien Enden der Abstützstreben angeordnete untere Auflagerelemente, die im wesentlichen als Drucklager die Funktion eines Loslagers übernehmen.

Die oberen Befestigungselemente weisen dabei eine zu der Abstandsrichtung der Abstützstreben im wesentlichen parallele sowie fluchtende Steckachse auf, während die unteren Auflagerelemente mit einer Auflagefläche zur nahezu ausschließlichen Druckkraftübertragung in die Abstützstreben ausgebildet sind.

Durch diese Ausbildung der gepäckträgerseitigen Halteeinrichtungen ist es möglich, den erfindungsgemäßen Universalgepäckträger an dem Fahrradrahmen-seitigen Zugbolzen mit Kniehebel zur Fixierung der Sattelstütze anzulenken und gleichzeitig an den rahmenseitigen, mit den Radschenkeln verbundenen Stützstreben abzustützen. Durch einfaches Lösen des grundsätzlich bereits vorhandenen Kniehebels, läßt sich somit der Gepäckträger am Fahrrad schnell montieren bzw. demontieren, ohne daß vorher zusätzliche Tragteile am Fahrradrahmen beispielsweise durch Schraubverbindungen befestigt werden müssen.

Eine vorteilhafte Weiterbildung des Universalgepäckträgers sieht vor, die oberen Befestigungselemente als Haken oder Ösen auszuformen, die vor der Vorderkante der Gepäckbrücke angeordnet sind. Für den Fall einer Hakenanordnung sind diese nach unten, d.h. im wesentlichen in Richtung zu den gepäckträgerseitigen Abstützstreben geöffnet, sodaß der Universalgepäckträger nach Öffnen des vorstehend genannten Kniehebels einfach in dem Zugbolzen von oben nach unten eingehängt werden kann, ohne daß dieser aus der Fixierschelle gezogen werden muß. Vertikalkräfte insbesondere nach oben gerichtete Kräfte, die demnach ein Aushängen des Hakens bewirken würden, werden bei der Hakenausführung durch die Haftreibung zwischen dem fest eingespannten Hakenelement sowie dem fahradseitigen Kniehebel kompensiert.

Zur weiteren Verbesserung der Stabilität des Gepäckträgers insbesondere in Fahrradquerrichtung können die unteren Auflagerelemente mittels jeweils eines, um die rahmenseitige Stützstrebe herumgeführten Elasikbands gesichtert sein. Jedes untere Auflagerelement ist dabei vorzugsweise dem Rohrprofil der fahradseitige Stützstreben angepaßt und bildet seitliche Führungen, die ein seitliches Abgleiten der Auflagefläche von der Stützstrebe verhindern.

Eine weitere vorteilhafte Ausbildung des Universalgepäckträgers betrifft eine innere Zug/Druckstrebe, die zwischen einem Mittenabschnitt einer jeden Abstützstrebe und der oberen Befestigungselement-seitigen Vorderkante der Gepäckbrücke verläuft und an diesen beiden Elementen jeweils beispielsweise durch Schweißen oder Löten fixiert ist. Auf diese Weise wird die innere Steifigkeit des Gepäckträgers bei geringer Gewichtszunahme erheblich gesteigert. Besonders vorteilhaft bei dieser Ausführung erwies sich, die Zug/Druckstreben über die Gepäckbrücke hinaus zu verlängern und an den jeweils vorstehenden Enden die oberen Befestigungselemente anzuordnen. Auf diese Weise werden auftretende Kräfte auf direktem Weg über die Halteeinrichtung in den Fahrradrahmen eingeleitet, wodurch die Maximalbelastung des Gepäckträgers erhöht werden kann. Gleichzeitig ergibt sich hierdurch ein insbesondere für sperrige Gepäckstücke notwendiger Anschlag, der ein Verrutschen des Gepäcks verhindert. Anstelle der inneren Zug/Druckstreben wäre es natürlich auch denkbar, an den Befestigungspunkten zwischen der Gepäckbrücke und den Abstützstreben schubbelastbare Winkel oder Bleche anzubringen, die ein Biegemoment seitens der Abstützstreben in die Gepäckbrücke einleiten können. Für den Fachmann dürfte in jedem Falle jedoch klar sein, daß die Konstruktion des Gepäckträgers für sich beliebig ausgeführt werden kann, solange sichergestellt ist, daß für die statische Bestimmtheit der Fahrradrahmen/Gepäckträger-Konfiguration auch bei maximaler Beladung keine zweidimensional belastbaren Befestigungselemente insbesondere an den unteren Anschlußpunkten des Gepäckträgers notwendig werden.

Weitere vorteilhafte Ausgestaltungen der Erfindung sind Gegenstand der Unteransprüche.

Die Erfindung wird nachfolgend anhand eines bevorzugten Ausführungsbeispiels unter Bezugnahme auf die Zeichnung näher erläutert.

Es zeigen:
Fig. 1 eine teilweise aufgebrochene Draufsicht des erfindungsgemäßen Universalgepäckträgers,
Fig. 2 eine Seitenansicht des Universalgepäckträgers nach Fig. 1.

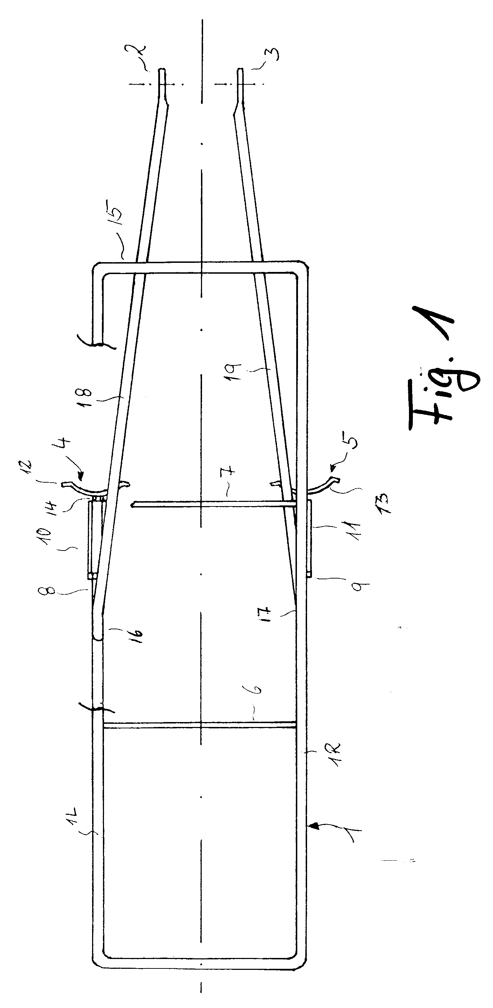

Gemäß Fig. 1 hat der erfindungsgemäße Universalgepäckträger für Fahrräder eine ebene Gepäckbrücke 1 als Auflager von Transportgut, die über eine Halteeinrichtung mit vier Anschlußpunkten 2-5 an einem nicht gezeigten Fahrradrahmen befestigbar ist. Zwei obere Anschlußpunkte 2, 3 sind dabei als Anschluß- bzw. Befestigungselemente zur Aufnahme von nichtgezeigten Bolzen oder Schrauben ausgebildet und übernehmen somit die Funktion eines zweidimensionalen Festlagers. Zwei untere Anschlußpunkte 4, 5 sind als im wesentlichen reine Auflagerelemente vorgesehen und stellen damit eindimensional belastbare Loslager dar.

Die Gepäckbrücke 1 wird in diesem Ausführungsbeispiel durch einen rechteckig gebogenen Draht- oder Rohrprofilrahmen gebildet, der durch zwei mittig angeordnete, in Längsrichtung der Gepäckbrücke 1 voneinander beabstandete Querstreben 6, 7 ausgesteift ist, die die beiden Längskanten 1L, 1R der rechteckigen Gepäckbrücke verbinden. Die Querstreben 6, 7 sind dabei an ihren jeweiligen Enden an dem Drahtrahmen angeschweißt oder angelötet.

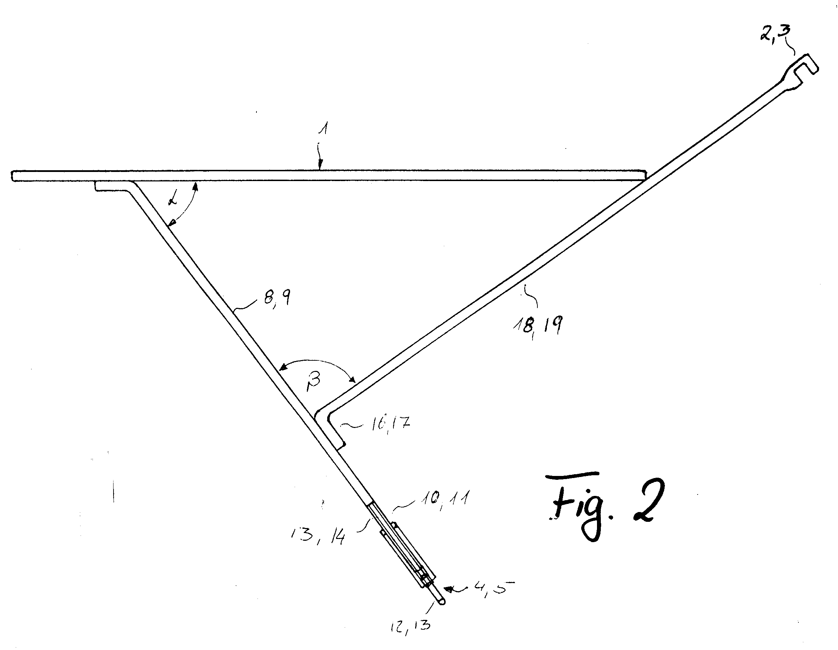

An einem hinteren Endabschnitt der Gepäckbrücke sind an dessen sich gegenüberliegenden Längskanten 1L, 1R zwei Abstützstreben 8, 9 angeschweißt oder angelötet, die sich bezüglich der Längskanten 1L, 1R gemäß Fig. 2 in einem stumpfen Winkel schräg nach unten und zum vorderen Endabschnitt der Gepäckbrücke 1 hin erstrecken. An den freien Enden der Abstützstreben 8, 9 ist jeweils ein eine Gewindehülse 10, 11 angebracht, in welche die Auflagerelemente 4, 5 eingeschraubt und bei einer frei wählbaren Einschraubtiefe mittels einer nicht gezeigten Mutter gekontert werden können. An dieser Stelle sei angemerkt, daß auch im Zuge einer kinematischen Umkehr die unteren Enden der Abstützstreben 8, 9 jeweils mit einem Außengewinde versehen sein können, auf die Auflagerelementseitige Gewindehülsen aufschraubbar sind.

Die Auflagerelemente 4, 5 bestehen gemäß Fig. 2 jeweils aus einem eine Auflagefläche bildenden, kreissegmentförmigen Draht oder Rohrprofil 12, 13, an dessen zur Auflagefläche abgewandten Seite in einem Mittenabschnitt des Drahts 12, 13 eine Gewindestange oder eine Gewindehülse 14 befestigt ist, die rechtwinklig von Draht 12, 13 absteht. Der Draht12, 13 ist dabei zu einem Kreisbogensegment geformt, wobei die beiden äußeren Enden des Drahts 12, 13 geringfügig entgegen der Kreisbogenrichtung umgebogen sind. Der Draht 12, 13 ist ferner zumindest an seiner Auflagefläche mit einem nicht dargestellten weichen Material wie Gummi oder dergleichen Polstermaterial überzogen oder beschichtet.

In einem Mittenabschnitt der beiden Abstützstreben 8, 9 ist gemäß Fig. 2 jeweils eine innere Zug/Druckstrebe 18, 19 vorzusweise durch Schweißen oder Löten angeschlossen, die sich in einem stumpfen Winkel bezüglich der Abstützstreben 8, 9 nach oben in Richtung vorderen Abschnitt der Gepäckbrücke 1 erstrecken und dabei an einer Vorderkante 15 der Gepäckbrücke befestigt sind. Wie aus der Fig. 2 ferner zu entnehmen ist, sind die Zug/Druckstreben 18, 19 über die Auflagerfläche der Gepäckbrücke 1 hinaus verlängert und an ihren jeweils freien Enden mit den oberen Anschlußelementen 2, 3 versehen.

Gemäß diesem bevorzugten Ausführungsbeispiel sind die Anschlußelemente 2, 3 als nach unten geöffnete Haken geformt, die einstückig mit den Zug/Druckstreben 18, 19 ausgebildet sind. Die Mittel- oder Steckachsen der beiden Haken sind miteinander fluchtend ausgerichtet und verlaufen in diesem bevorzugten Ausführungsbeispiel parallel zur Vorderkante 15 der Gepäckbrücke 1 und damit auch im wesentlichen parallel zur gedachten Verbindungsstrecke zwischen den beiden unteren Auflagerelementen 4, 5. Die Zug/Druckstreben 18, 19 sind desweiteren im Bereich ihrer Schweißverindungen 16, 17 mit den Abstützstreben 8, 9 nach innen abgebogen, sodaß ihre freien Enden konisch zueinander laufen.

Die Montage des erfindungsgemäßen Universalgepäckträgers erfolgt auf die folgende Weise:
Wie eingangs der Beschreibung bereits angedeutet wurde, weist nahezu jedes Fahrrad ein Sattelstützenaufnahmerohr auf, dessen oberes und offenes Ende von einer Schelle umgeben ist. Die Schelle ist bei den modernen Rädern mittels eines Schnellspanners bestehend aus Zugbolzen und Kniehebel anziehbar. Bei einem Lösen des Kniehebels ergibt sich zwischen Schelle und Hebel normalerweise ein Spalt, der im Übrigen durch eine Justiermutter an einem dem Kniehebel gegenüberliegenden Endabschnitt des Zugbolzens weitenverstellbar ist.

Für die Montage des Universalgepäckträgers gemäß der Erfindung wird einfach der ansich bekannte Kniehebel am Fahrrad geöffnet und die oberen Hakenelemente 2, 3 in den hierbei entstehenden Spalten am Zugbolzen des fahrradseitigen Sattelstützenaufnahmerohrs eingehängt. Anschließend wird der Gepäckträger an dessen hinterem Abschnitt abgesenkt, bis die kreissegmentförmigen Auflagerelemente 4, 5 mit den hinteren Stützstreben des Fahrrads in Eingriff kommen. Ab diesem Zeitpunkt kann der Kniehebel wieder in seine Spannposition umgelegt und somit die Hakenelemente 2, 3 fest eingeklemmt werden.

Wie vorstehend bereits beschrieben, dient die Kreisbogenform der Auflagerelemente 4, 5 dazu, eine seitliche Führung zu schaffen, die ein Abrutschen der Auflagerflächen von den fahrradseitigen Stützstreben verhindern sollen. Um diese Sicherheitsmaßnahme noch zu verbessern, können wahlweise nicht gezeigte Gummielemente um die fahrradseitigen Stützstreben geführt und in den abgebogenen Endabschnitten der Auflagerelemente 4, 5 oder genauer gesagt des Drahts 12, 13 eingehängt werden.

Um bei der Erstmontage des erfindungsgemäßen Gepäckträgers auch bei unterschiedlichsten Rahmengeometrien eine horizontal verlaufende Lagerungsfläche der Gepäckbrücke 1 zu erreichen, können die Abstützstreben 8, 9 des Gepäckträgers durch die endseitig eingeschraubten Auflagerelemente 4, 5 in ihrer Gesamtlänge verstellt werden.

Die Erfindung betrifft einen Universalgepäckträger für Fahrräder dessen obere Anschlußpunkte als Zug/Druckbelastbare Festlager und dessen untere Anschlußpunkte als Druck-belastbare Loslager ausgebildet sind. Die oberen Lager sind dabei derart konstruiert, daß sie ein Eingreifen in den Zugbolzen einer konventionellen Sattelstützeneinspannung ermöglichen, während die unteren Lager als Auflagerelemente für ein Abstützen an hintern Radschenkel-Stützstreben eines Fahrrads vorgesehen sind.

## Patentansprüche

1. Universalgepäckträger mit
einer Gepäckbrücke (1), der in einem Winkel zur Gepäckbrückenebene ausgerichtete Abstützstreben (8, 9) angefügt sind und
einer Haltevorrichtung mit oberen Anschlußpunkten (2, 3), die als zumindest zweidimensional belastbare Zug/Druck-Festlager zur Aufnahme eines Bolzens oder einer Schraube ausgebildet sind sowie mit unteren Anschlußpunkten (4, 5), die an freien Enden der Abstützstreben (8, 9) vorgesehen sind,
dadurch gekennzeichnet, daß
die unteren Anschlußpunkte (4, 5) als im wesentlichen eindimensional belastbare Auflagerelemente ausgebildet sind, welche die Funktion eines Druck-Loslagers übernehmen.

2. Universalgepäckträger nach Anspruch 1, dadurch gekennzeichnet, daß
die oberen Lager (2, 3) derart ausgerichtet sind, daß sie eine einzige Steckachse für einen gemeinsamen Bolzen oder Schraube bilden.

3. Universalgepäckträger nach einem der vorstehenden Ansprüche, dadurch gekennzeichnet, daß
der Gepäckträger zum Anbau an einen Fahrradrahmen vorgesehen ist, bei dem ein Stützrohr eines Fahrradsattels mittels einer Fixiervorrichtung in einem Aufnahmerohr des Fahrradrahmens feststellbar ist.

4. Universalgepäckträger nach Anspruch 3, dadurch gekennzeichnet, daß
die oberen Anschlußpunkte (2, 3) derart ausgebildet sind, daß sie mit der Fixiervorrichtung für den Fahrradsattel zur Ausbildung des Festlagers in Eingriff bringbar sind.

5. Universalgepäckträger nach einem der vorstehenden Ansprüche, dadurch gekennzeichnet, daß
die unteren Auflagerelemente (4, 5) jeweils eine Auflagerfläche zur ausschließlichen Druckkraftübertragung in die Abstützstreben (8, 9) haben.

6. Universalgepäckträger nach einem der vorstehenden Ansprüche, dadurch gekennzeichnet, daß
die Abstützstreben (8, 9) biegesteif an der Gepäckbrücke (1) befestigt sind.

7. Universalgepäckträger nach Anspruch 6, gekennzeichnet durch
innere Zug/Druckstreben (18, 19), die an jeweils einem Ende mit jeweils einer Abstützstrebe (8, 9) in deren jeweiligem Mittenabschnitt verbunden sind und an jeweils einem vorderen Abschnitt mit der Vorderkante (15) der Gepäckbrücke (1) verbunden sind.

8. Universalgepäckträger nach einem der vorstehenden Ansprüche, dadurch gekennzeichnet, daß
die oberen Lager (2, 3) als Hakenelemente ausgebildet sind.

9. Universalgepäckträger nach einem der Ansprüche 1 bis 8, dadurch gekennzeichnet, daß
die oberen Lager (2, 3) als Ösen oder Lageraugen ausgebildet sind.

10. Universalgepäckträger nach Anspruch 7, dadurch gekennzeichnet, daß
die inneren Zug/Druck-Streben (18, 19) über die Vorderkante (15) und damit auch über die Gepäckbrückenebene hinaus verlängert sind und sich an deren oberen freien Enden die oberen Zug/Druck-Festlager (2, 3) befinden.

11. Universalgepäckträger nach einem der Ansprüche 1 bis 10 dadurch gekennzeichnet, daß
die unteren Auflagerelemente (4, 5) jeweils aus einen drahtförmigen Rundprofil oder einer Platte gebildet werden und zu einem Teilkreis ausgeformt sind.

12. Universalgepäckträger nach einem der vorstehenden Ansprüche, dadurch gekennzeichnet, daß
die unteren Auflagerelemente (4, 5) bezüglich der Abstützstreben (8, 9) zu deren Längeneinstellung verstellbar sind.

13. Universalgepäckträger nach Anspruch 12, dadurch gekennzeichnet, daß
die unteren Auflagerelemente (4, 5) einen Schraubanschluß aufweisen, mittels dem sie mit einem entsprechenden Schraubanschluß am jeweils freien unteren Ende der Abstützstreben (8, 9) verschraubbar sind.

14. Universalgepäckträger nach einem der vorstehenden Ansprüche, dadurchh gekennzeichnet, daß
an den unteren Auflagerelementen (4, 5) jeweils ein elastisches Element vorgesehen ist, welches unter Ausbildung jeweils eines manuell zu öffnenden und elastisch weitenverstellbaren Rings mit dem jeweiligen Auflagerelement (4, 5) in Eingriff bringbar ist.

15. Universalgepäckträger nachh Anspruch 3 oder 4, dadurch gekennzeichnet, daß
die Fixiervorrichtung einen Zugbolzen oder eine Zugschraube mit einem Kniehebel zur Feststellung des Fahrradsattel-Stützrohres hat, wobei die oberen Anschlußpunkte (2, 3) an dem Zugbolzen oder der Zugschraube eingreifen.
